# EUROPÄISCHE PATENTSCHRIFT

(11) **EP 2 960 278 B1**
(45) Veröffentlichungstag und Bekanntmachung des Hinweises auf die Patenterteilung: **29.03.2017**
(21) Anmeldenummer: 14173400.4
(22) Anmeldetag: 23.06.2014
(51) Int. Cl.: C08K 3/36, C08K 5/107, C08K 5/3492, C08K 9/08, C08L 21/00

(54) **Haftsysteme für Kautschukmischungen**
Adhesive systems for rubber mixtures
Système d'adhérence pour mélanges de caoutchouc

(43) Veröffentlichungstag der Anmeldung: 30.12.2015
(73) Patentinhaber: LANXESS Deutschland GmbH, 50569 Köln (DE)
(72) Erfinder: Unterberg, Heinz, 41540 Dormagen (DE); Weidenhaupt, Hermann-Josef, 50259 Pulheim (DE); Wiedemeier-Jarad, Melanie, 41540 Dormagen (DE); Feldhues, Ulrich, 51465 Bergisch Gladbach (DE)

(56) Entgegenhaltungen:
- EP-A1- 1 362 888
- EP-A1- 1 669 400
- DE-A1- 1 902 854
- DATABASE WPI Week 200875 Thomson Scientific, London, GB; AN 2008-M71279 XP002728715, -& JP 2008 239535 A (MITSUI CHEM INC) 9. Oktober 2008 (2008-10-09)

## Beschreibung

Die vorliegende Erfindung betrifft Mischungen enthaltend ein oder mehrere Resorzinester, Melaminformaldehydether, und kieselsäurebasierende Füllstoffe, Haftsysteme enthaltend solche Mischungen, Verfahren zur Herstellung solcher Mischungen bzw. Haftsysteme, daraus hergestellte Kautschukvulkanisate und deren Verwendung.

Verbundartikel wie Reifen, Förderbänder, Riemen aller Art Keilriemen, verstärkte Schläuche, Feuerwehrschläuche oder beschichtete Gewebe müssen sowohl elastisch sein, als auch Zug- oder Druckbelastung widerstehen. Da Elastomere sich bei Belastung verformen, ist zur Kraftübertragung ein Festigkeitsträger erforderlich. Solche Festigkeitsträger bestehen je nach Belastung aus einer oder mehreren Lagen Textil- oder Stahlcord, teilweise werden beide miteinander kombiniert.

Um eine Bindung bzw. Haftung der Elastomere an den jeweiligen Festigkeitsträger zu erreichen, kann ein sogenanntes Haftsystem direkt auf den Festigkeitsträger aufgebracht, oder das Haftsystem in die Kautschukmischung eingebracht, oder beide Methoden kombiniert werden. Die zur Einbringung in die Kautschukmischung vorgesehenen sogenannten Direkthaftsysteme enthalten Resorzin, Formaldehydspender und Kieselsäure in einer Kautschukmischung. Bei der Wärmebehandlung der Mischung entsteht aus Resorzin und Formaldehydspender ein Resorzin-Formaldehyd-Harz, das die Bindung zwischen Gummi und dem Festigkeitsträger erhöht.

Ein Nachteil dieser Systeme ist der hohe Verbrauch der Harzkomponente. Zudem sind Haftsysteme aus Resorzin-Formaldehyd-Harz korrosionsanfällig, besonders in Kontakt mit Messingbeschichtungen und Verwendung von Hexamethylentetramin als Formaldehydspender.

Zur Beschichtung von Festigkeitsträgern vorgesehene Haftsysteme werden als RFL-Dip bezeichnet. Bei diesen wird ein Resorzin-Formaldehyd-Vorkondensat (Harz) mit Latex versetzt und anschließend zur Imprägnierung der Festigkeitsträger verwendet.

Die geringe Löslichkeit des Resorzins in Kautschuk kann zu Ausblüherscheinungen führen. Für eine ausreichende homogene Verteilung im Kautschuk muss Resorzin heiß (> 120°C) verarbeitet werden, was wegen des hohen Dampfdrucks zur Sublimation erheblicher Mengen von Resorzin führt. So kann das Resorzin beim Einmischen unter Bildung weißer beißender Schwaden abrauchen und aufgrund toxikologischer Eigenschaften zu gesundheitlicher Beeinträchtigung der Mitarbeiter im Betrieb führen. Das Auftreten von Ausblüherscheinungen aufgrund schlechter Mischbarkeit ist bei gleichzeitiger Anwesenheit von Hexamethylentetramin durch die Bildung von sogenanntem Resotropin verstärkt.

Die Lagerstabilität von Mischungen enthaltend Resorzin ist beeinträchtigt, da Resorzin hygroskopische Eigenschaften besitzt und reaktive OH-Gruppen aufweist, die während der Lagerung der Haftsysteme zu unerwünschten Veränderungen führen können.

Kautschukmischungen unter Verwendung des klassischen Haftsystems Resorzin/Hexamethylentetramin/Kieselsäure haben daher den Nachteil, dass daraus hergestellte Vulkanisate eine geringe Feuchtebeständigkeit aufweisen (gerade in Bezug auf Haftung an Messing). Die geringe Feuchtigkeitsbeständigkeit kann zudem zu einer ungewünschten Klumpenbildung des Haftsystems führen.

Dies betrifft auch Vulkanisate erhalten durch Verwendung von Hexamethylentetraminderivaten enthaltenden Haftsystemen. Wird Hexamethylmethylolmelamin (HMMM) anstelle von Hexamethylentetramin eingesetzt, so wird eine etwas höhere Feuchtebeständigkeit erzielt.

Resorzin ist wegen seiner schlechten Dispergierbarkeit in Kautschukhaftmischungen schwierig zu verarbeiten. Daher werden meist leicht dispergierbare Abmischungen des Resorzins mit einem Kieselsäure-Füllstoff verwendet (DE 1 301 478) wie z.B. das Cofill 118 der DEGUSSA, welches ein 1 : 1-Gemisch von Resorzin und einer bestimmten Kieselsäure ist. Zwar enthält diese Mischung an Stelle von üblicherweise klumpen- bzw. schuppenförmigem Resorzin die Verbindung in gleichmäßig verteilter Form, jedoch kann es bei der Verarbeitung zu unerwünschter Staubentwicklung kommen und die Neigung des Resorzins zur Sublimation aus der Kautschukmischung unter den üblichen Verarbeitungstemperaturen wird nicht verringert, wodurch Absauganlagen zur Reinhaltung der Arbeitsluft erforderlich sind. Andererseits sind die Dosierbarkeit und Rieselfähigkeit des pulverförmigen Resorcins gemäß EP 0 035 104 bei weitem nicht optimal.

Als Formaldehyd-Spender eignen sich neben Hexamethylentetramin auch Methylolaminderivate. Zudem ist bekannt, zur Erzielung einer hohen Haftung den Füllstoff Russ in der Kautschukmischung teilweise durch Kieselsäure zu ersetzen (DE 1 620 786). Weitere wesentliche Haftverbesserungen sind möglich durch Zugabe von zur Kunstharzbildung befähigten Komponenten wie Phenol und bzw. oder Amine und Aldehyde oder Aldehyde abspaltende Verbindungen zu den bekannten Kautschukmischungen. Eine breite Anwendung als Harzbildungskomponenten in Kautschukhaftmischungen finden Resorzin und Hexamethylentetramin (HEXA) (GB 801 928, FR 1 021 959), gegebenenfalls in Kombination mit Kieselsäurefüllstoff (DE 1 078 320).

Der vorliegenden Erfindung liegt die Aufgabe zugrunde, ein Haftsystem für Kautschukmischungen bereitzustellen, das die oben genannten Nachteile der bekannten Haftsysteme nicht aufweist, insbesondere toxikologisch weniger bedenklich ist und sich problemlos mischen und verarbeiten lässt. Dies bedeutet, das Haftsystem soll eine homogene Zusammensetzung aufweisen, gut rieselfähig und dosierbar sein, vorzugsweise beim Wiegevorgang und Einmischen nicht stauben, in Kautschukmischungen gut dispergierbar sein und die Sublimationsproblematik von Resorzin vermeiden. Gleichzeitig sollten die anwendungsrelevanten Eigenschaften, insbesondere die Haftung zwischen Ein- oder Auflage und Vulkanisat beibehalten oder verbessert werden und weiterhin die Härte und der Modul 300 erhöht werden, ohne jedoch gleichzeitig die Zugfestigkeit zu verringern.

Überraschend wurde nun gefunden, dass erfindungsgemäße Mischungen enthaltend ein oder mehrere Resorzinester der Formel (I), ein oder mehrere Melaminformaldehydether der Formel (II) sowie ein oder mehrere kieselsäurebasierende Füllstoffe bzw. diese Mischungen enthaltende Haftsysteme beim Einsatz in Kautschukmischungen, insbesondere bei Naturkautschuk enthaltenden Kautschukmischungen, zu einer deutlich verbesserten Härte und Modul 300 unter Beibehaltung der Zugfestigkeit bei den daraus hergestellten Vulkanisaten führt.

Die erfindungsgemäßen Haftsysteme sind staubarm, rieselfähig, setzen bei der Verarbeitung kein Resorzin frei und zeigen keine Dispersionsprobleme im Kautschuk. Zudem zeigen sie keine Ausblüherscheinungen.

Die vorliegende Erfindung betrifft Mischungen enthaltend ein oder mehrere Resorzinester der Formel (I), Melaminformaldehydether der Formel (II), und kieselsäurebasierender Füllstoffe, bzw. Haftsysteme enthaltend diese Mischungen sowie ein Verfahren zur Herstellung dieser Mischungen bzw. Haftsysteme, daraus hergestellte Kautschukvulkanisate und deren Verwendung.

Die erfindungsgemäßen Mischungen enthalten einen oder mehrere Resorzinester der Formel (I) 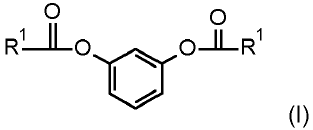 worin
alle Reste R¹ gleich oder verschieden sind und Wasserstoff oder einen geradkettigen oder verzweigten C1-C4-Alkylrest oder einen Phenylrest, vorzugsweise Methyl bedeuten.

Die erfindungsgemäßen Mischungen enthalten weiterhin einen oder mehrere Melamin-formaldehydether der Formel (II) 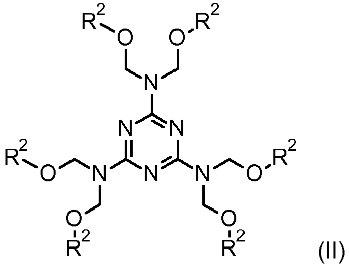 worin
alle Reste R² gleich oder verschieden sind und Wasserstoff oder einen geradkettigen oder verzweigten C1-C4-Alkylrest oder einen Phenylrest, bevorzugt Wasserstoff oder Methyl, besonders bevorzugt Methyl bedeutet, wobei aber nicht mehr als 5, vorzugsweise nicht mehr als 4, besonders bevorzugt nicht mehr als 3, ganz besonders bevorzugt nicht mehr als 2 und meist bevorzugt nicht mehr als 1 Rest R² für Wasserstoff steht.

Bei der vorliegenden Erfindung können anstelle der oder zusammen mit den Verbindungen der Formel (II) auch Polymere oder Oligomere, insbesondere Di-, Tri-, oder Tetramere davon eingesetzt werden, worunter Verbindungen zu verstehen sind, bei denen jeweils ein oder mehrere der Aminofunktionen einer Verbindung der Formel (II) anstelle ein oder mehrerer Reste CH₂OR² durch -CH₂- Gruppen und/oder -CH₂-O-CH₂- Gruppen mit jeweils ein oder mehreren weiteren Einheiten der Formel (II) analog über deren Aminofunktion(en) verbunden sind. Bei der nachfolgenden Beschreibung der verschiedenen Ausführungsformen der vorliegenden Erfindung sind die Verbindungen der Formel (II) so zu verstehen, dass auch die Polymere oder Oligomere, insbesondere Di-, Tri-, oder Tetramere der Verbindungen umfasst sind.

In einer bevorzugten Ausführungsform beträgt die Summe der Resorzinester der Formel (I) und der Melaminformaldehydether der Formel (II) incl. deren Oligomeren und/oder Polymeren wenigstens 10 Gew.%, bevorzugt wenigstens 20 Gew.%, besonders bevorzugt 20 - 80 Gew.%, insbesondere 25 - 55 Gew.%, jeweils bezogen auf die Gesamtmasse der Mischung.

Die erfindungsgemäßen Mischungen bzw. Haftsysteme sind vorzugsweise im Wesentlichen frei von Resorzin als solchem, worunter im Zusammenhang mit der vorliegenden Erfindung ein Gehalt bezogen auf die Gesamtmasse der Mischung bzw. des Haftsystems von weniger als 5%, weiter bevorzugt weniger als 2%, noch weiter bevorzugt weniger als 1%, insbesondere weniger als 0,5% und ganz besonders bevorzugt weniger als 0,1% zu verstehen ist.

Generell können die Resorzinester der Formel (I) und Melaminformaldehydether der Formel (II) in einem beliebigen Verhältnis miteinander gemischt werden.

Die erfindungsgemäßen Mischungen bringen ihre Vorteile besonders in Direkthaftsystemen, also bei zur Einbringung in die Kautschukmischung vorgesehenen Haftsystemen zum Tragen. Die vorliegende Erfindung umfasst daher auch Haftsysteme für Kautschukmischungen, insbesondere Direkthaftsysteme, bestehend aus den erfindungsgemäßen Mischungen.

Die erfindungsgemäße Mischung bzw. das Haftsystem enthält zudem ein oder mehrere kieselsäurebasierende Füllstoffe. Vorzugsweise werden dafür folgende Stoffe verwendet:
- Kieselsäure, insbesondere Fällungskieselsäure oder pyrogene Kieselsäure, hergestellt z.B. durch Fällung von Lösungen von Silikaten oder Flammenhydrolyse von Siliziumhalogeniden mit spezifischen Oberflächen von 5 - 1000 m²/g, bevorzugt von 50 - 400 m²/g, ganz besonders bevorzugt von 100 - 300 m²/g (BET-Oberfläche) und mit Primärteilchengrößen von 10 - 400 nm. Die Kieselsäuren können gegebenenfalls auch als Mischoxide mit anderen Metalloxiden wie Al-, Mg-, Ca-, Ba-, Zn-, Zr-, Ti-Oxiden vorliegen.
- synthetische Silikate, wie Aluminiumsilikat, Erdalkalisilikate wie Magnesium- oder Calciumsilikat, mit BET-Oberflächen von 20 - 400 m²/g und Primärteilchengröße von 10 - 400 nm,
- natürliche Silikate, wie Kaolin und andere natürliche vorkommende Kieselsäuren,

Die genannten Kieselsäuren und Silikate können auch in silanierter Form vorliegen, welche durch Behandlung mittels Chlorsilanen wie Monochlorsilan, Dichlorsilan, Trichlorsilan und Tetrachlorsilan, Organochlorsilanen wie Methyltrichlorsilan, Dimethyldichlorsilan, Trimethylchlorsilan, Ethyltrichlorsilan, Diethyldichlorsilan, Triethylchlorsilan sowie (Meth)acryloxy- und/oder Alkoxygruppen-haltige Silane wie Acryloxypropyltrimethoxysilan, (3-Mercaptopropyl)trimethoxysilan, 3-Glycidoxypropyltrimethoxysilan, 3-Aminopropyltrimethoxysilan, Mono-, Di-, Tri-, oder Tetramethoxysilan erhältlich sind. Entsprechende Herstellungsverfahren sind u.a. in EP 2 033 990 B1 angegeben.

Es können selbstverständlich zusätzliche Füllstoffe verwendet werden. Insbesondere sind hierfür nach dem Flammruß, Furnace- oder Gasruß-Verfahren hergestellt Ruße geeignet, welche BET-Oberflächen von 20 - 200 m²/g besitzen, wie SAF-, ISAF-, IISAF-, HAF-, FEF- oder GPF-Ruße.

Der Gesamtgehalt an Füllstoffen im Verhältnis zum Resorzinester der Formal (I) und Melaminformaldehydethern der Formel (II) in der Mischung bzw. im Haftsystem kann prinzipiell in beliebigen Grenzen variiert werden. In einer bevorzugten Ausführungsform liegt das erfindungsgemäße Haftsystem als sogenannte "dry liquid", d.h. auf dem Füllstoff absorbiert vor.

Die Herstellung der erfindungsgemäßen Mischung bzw. des Haftsystems kann beispielsweise dadurch erfolgen, dass die Komponenten Füllstoff und der Melaminformaldehydether der Formel (II) miteinander verrührt und anschließend der Resorzinester gemäß der Formel (I) unter Rühren zugegeben und weitergerührt wird, bis eine homogene Mischung vorliegt.

Alternativ kann der kieselsäurebasierende Füllstoff zuerst mit Resorzinester(n) der Formel (I) und anschließend mit Melaminformaldeyhdether(n) der Formel (II) beaufschlagt, oder der kieselsäurebasierende Füllstoff mit einer Mischung aus Melaminformaldeyhdether(n) der Formel (II) und Resorzinester(n) der Formel (I) beaufschlagt, oder Resorzinester der Formel (I) und Melaminformaldeyhdether der Formel (II) jeweils separat mit dem kieselsäurebasierenden Füllstoff gemischt und anschließend die Mischungen vereint werden. Überraschenderweise zeigte sich, dass die auf kieselsäurebasierende Füllstoff aufgezogene Mischung aus Resorzinester und Melamin-formaldehydether eine weit höherer Lagerungsstabilität aufweist als eine entsprechende Mischung, die nicht auf diesem Füllstoff absorbiert ist und bei deren Lagerung typischerweise eine Viskositätserhöhung beobachtet wird.

In einer erfindungsgemäßen Ausführungsform wird die Mischung bzw. das Haftsystem in Kautschukmischung verwendet, insbesondere in mit Schwefel vernetzbaren Kautschukmischungen. Diese Kautschukmischungen sind ebenfalls Gegenstand der vorliegenden Erfindung.

Als Elastomer werden in diesen Kautschukmischungen Naturkautschuk (NR) und/oder Synthesekautschuke verwendet. Bevorzugte Synthesekautschuke sind beispielsweise
- BR: - Polybutadien
- ABR: - Butadien/Acrylsäure-C1-C4-alkylester-Copolymerisat
- CR: - Polychloropren
- IR: - Polyisopren
- SBR: - Styrol/Butadien-Copolymerisate mit Styrolgehalten von 1 - 60, vorzugsweise 20-50 Gew-%
- IIR: - Isobutylen/Isopren-Copolymerisate
- NBR: - Butadien/Acrylnitril-Copolymerisate mit Acrylnitrilgehalten von 5-60, vorzugsweise 10-50 Gew.-%
- HNBR: - teilhydrierter oder vollständig hydrierter NBR-Kautschuk
- EPDM: - Ethylen/Propylen/Dien-Copolymerisate

Die Kautschukmischungen enthalten vorzugsweise 5 bis 160 phr, besonders bevorzugt 8 bis 120 phr und ganz besonders bevorzugt 12 bis 70 phr an kieselsäurebasierenden Füllstoffen. Der Gesamtanteil an zusätzlichen Füllstoffen, insbesondere Rußen, bevorzugt nach dem Flammruß, Furnace- oder Gasruß-Verfahren hergestellten Rußen in der Kautschukmischung beträgt typischerweise von 0 bis 160 phr, vorzugsweise 1 bis 100 phr, besonders bevorzugt 5 bis 80 phr. Sofern die Kautschukmischung Ruß und kieselsäurebasierende Füllstoffe enthält, so beträgt die Gesamtmenge dieser beiden Füllstoffarten vorzugsweise 20 bis 160 phr, besonders bevorzugt 25 bis 140 phr.

Des Weiteren können die Kautschukmischungen einen oder mehrere Vernetzer enthalten. Hierfür sind insbesondere Schwefel-basierende oder peroxidische Vernetzer geeignet, wobei Schwefel-basierte Vernetzer besonders bevorzugt sind.

Als peroxidische Vernetzer werden vorzugsweise Bis(2,4-dichlorbenzyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)butan, 4,4-Di-tert-butylperoxynonylvalerat, Dicumylperoxid, 2,5-Dimethyl-2,5-di(tert-butylperoxy)hexan, tert-Butylcumylperoxid, 1,3-Bis(t-butylperoxyisopropyl)benzol, Di-tert-butylperoxid und 2,5-Dimethyl-2,5-di(tert-butylperoxy)-3-hexin eingesetzt.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellitat, Ethylenglycoldi(meth)acrylat, Butandioldi(meth)acrylat, Trimetylolpropantri(meth)acrylat, Zinkdiacrylat, Zinkdimethacrylat, 1,2-Polybutadien oder N,N'-m-Phenylendimaleinimid geeignet.

Als Vernetzer kann Schwefel in elementarer löslicher oder unlöslicher Form oder in Form von Schwefelspendern eingesetzt werden. Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT) und Tetramethylthiuramdisulfid (TMTD) in Frage.

Grundsätzlich kann die Vernetzung der Kautschukmischung mit Schwefel oder Schwefelspendern allein erfolgen, oder zusammen mit Vulkanisationsbeschleunigern, wofür z.B. Dithiocarbamate, Thiurame, Thiazole, Sulfenamide, Xanthogenate, bi- oder polycyclische Amine, Guanidinderivate, Dithiophosphate, Caprolactame und Thioharnstoffderivate geeignet sind. Weiterhin sind auch Zinkdiamindiisocyanat, Hexamethylentetramin, 1,3-Bis(citraconimidomethyl)benzol sowie zyklische Disulfane geeignet. Bevorzugt enthalten die erfindungsgemäßen Kautschukmischungen Schwefel-basierende Vernetzer und Vulkanisationsbeschleuniger.

Besonders bevorzugt werden als Vernetzungsmittel Schwefel, Magnesiumoxid und/oder Zinkoxid eingesetzt, denen die bekannten Vulkanisationsbeschleuniger, wie Merkaptobenzothiazole, Thiazolsulfenamide, Thiurame, Thiocarbamate, Guanidine, Xanthogenate und Thiophosphate zugesetzt werden.

Die Vernetzungsmittel und Vulkanisationsbeschleuniger werden bevorzugt in Mengen von 0,1 bis 10 phr, besonders bevorzugt von 0,1 bis 5 phr, in der Kautschukmischung eingesetzt.

Die Kautschukmischungen können weitere Kautschukhilfsmittel enthalten, wie Reaktionsbeschleuniger, Alterungsschutzmittel, Wärmestabilisatoren, Lichtschutzmittel, Antioxidantien, insbesondere Ozonschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, Metalloxide und Aktivatoren, insbesondere Triethanolamin, Polyethylenglykol, Hexantriol, Silane und Reversionsschutzmittel.

Diese Kautschukhilfsmittel werden in üblichen Mengen eingesetzt, die sich u. a. nach dem Verwendungszweck der Vulkanisate richten. Übliche Mengen sind 0,1 bis 30 phr.

Als Alterungsschutzmittel werden bevorzugt alkylierte Phenole, styrolisiertes Phenol, sterisch gehinderte Phenole wie 2,6-Di-tert.-butylphenol, 2,6-Di-tert-butyl-p-kresol (BHT), 2,6-Di-tert.-butyl-4-ethylphenol, estergruppenhaltige sterisch gehinderte Phenole, thioetherhaltige sterisch gehinderte Phenole, 2,2'-Methylen-bis-(4-methyl-6-tert-butylphenol) (BPH) sowie sterisch gehinderte Thiobisphenole verwendet.

Falls eine Verfärbung des Kautschuks ohne Bedeutung ist, können auch aminische Alterungsschutzmittel z. B. Mischungen aus Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylendiaminbasis, z. B. N-Isopropyl-N'-phenyl-p-phenylendiamin, N-1,3-Dimethylbutyl-N'-Phenyl-p-phenylendiamin (6PPD), N-1,4-Dimethylpentyl-N'-phenyl-p-phenylendiamin (7PPD), N,N'-bis-(1,4-Dimethylpentyl)-p-phenylendiamin (77PD) eingesetzt werden.

Weitere Alterungsschutzmittel sind Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI), welche meist in Kombination mit obigen phenolischen Alterungsschutzmitteln eingesetzt werden. TMQ, MBI und MMBI werden vor allem für NBR-Kautschuke verwendet, welche peroxidisch vulkanisiert werden.

Die Ozonbeständigkeit kann durch Antioxidantien wie beispielsweise N-1,3-Dimethylbutyl-N'-phenyl-p-phenylendiamin (6PPD), N-1,4-Dimethylpentyl-N'-phenyl-p-phenylendiamin (7PPD), N,N'-Bis- (1,4-dimethylpentyl)-p-phenylendiamin (77PD), Enolether oder cyclische Acetale. verbessert werden.

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C-Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, kann die erfindungsgemäße Kautschukmischungszusammensetzung auch Flammschutzmittel enthalten. Hierfür werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Vor der Vernetzung können dem Kautschukvulkanisat auch weitere Kunststoffe beigefügt werden, welche beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

In einer bevorzugten Ausführungsform enthält die Kautschukmischung 0,1 bis 50 phr des Reversionsschutzmittels 1,6-Bis(N,N-dibenzylthiocarbamoyldithio)hexan (CAS-Nr. 151900-44-6).

Das erfindungsgemäße Haftsystem führt zu einer guter Haftung zwischen Gummi und Polyamid-, Viscose-, Polyester-, Aramid- oder Stahlcord; ganz besonders zwischen Gummi und Textilfasern.

Die erfindungsgemäßen Kautschukmischungen sind vorzugsweise im Wesentlichen frei von Resorzin als solchem, worunter im Zusammenhang mit der vorliegenden Erfindung ein Gehalt bezogen auf die Gesamtmasse der Kautschukmischungen von weniger als 1%, weiter bevorzugt weniger als 0,5%, noch weiter bevorzugt weniger als 0,1 %, insbesondere weniger als 0,05 % und ganz besonders bevorzugt weniger als 0,01% zu verstehen ist.

Ein weiterer Gegenstand der vorliegenden Erfindung ist ein Verfahren zur Herstellung von Kautschukmischungen, durch Mischen von Natur- und/oder Synthesekautschuk(en) mit einer Mischung aus Resorzinester der Formel (I), Melaminformaldeyhdether der Formel (II) und kieselsäurebasierendem Füllstoff, oder mit Resorzinester der Formel (I) und Melaminformaldeyhdether der Formel (II) von denen mindestens eine Komponente oder beide Komponenten an kieselsäurebasierendem Füllstoff absorbiert vorliegt. Weiterhin können im Mischverfahren die oben genannten zusätzlichen Füllstoffe, Vernetzer, Vulkanisationsbeschleuniger und Kautschukhilfsmittel zugesetzt werden. Das Haftsystem kann dabei separat oder in beliebiger Mischung zu der Kautschukmischung hinzugegeben werden.

Die Erfindung betrifft zudem ein Verfahren zur Herstellung von Vulkanisaten durch Vulkanisation von erfindungsgemäßen Kautschukmischungen, vorzugsweise bei Massetemperaturen von 100 bis 200 °C, besonders bevorzugt bei Massetemperaturen von 130 bis 180 °C.

Ein weiterer Aspekt der vorliegenden Erfindung sind Vulkanisate erhältlich durch Vulkanisation der erfindungsgemäßen Kautschukmischungen.

Die vorliegende Erfindung betrifft weiterhin Verbundartikel wie Reifen, Förderbänder, Riemen aller Art, Keilriemen, verstärkte Schläuche, Feuerwehrschläuche oder beschichtete Gewebe enthaltend Vulkanisate der erfindungsgemäßen Kautschukmischungen.

### Bestimmung der Eigenschaften von Kautschukmischung bzw. Vulkanisaten:

### Mooney-Viskositätsmessung:

Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird. Die Viskosität wird zusammen mit den jeweiligen Prüfbedingungen angegeben, beispielsweise ML (1+4) 100°C (Mooney viscosity, large rotor, Vorwärmzeit und Prüfzeit in Minuten, Prüftemperatur).

### Scorch-Verhalten (Anvulkanisationszeit t 5):

Des Weiteren kann mit der gleichen Prüfung wie oben beschrieben auch das Scorch-Verhalten einer Mischung gemessen werden. Die gewählte Temperatur betrug 130°C. Der Rotor läuft solang, bis der Drehmomentswert nach Durchlaufen eines Minimums auf 5 Mooney-Einheiten relativ zum Minimumswert angestiegen ist (t5). Je größer der Wert ist (Einheit Sekunden), umso langsamer findet die Anvulkanisation statt. In der Praxis ist meist eine Anvulkanisationszeit von mehr als 300 Sekunden vorteilhaft, welche unter Berücksichtigung von Verarbeitungssicherheit und Zeitaufwand aber weniger als 1000 Sekunden betragen sollte.

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Als Ausvulkanisationszeit, wird die Zeit bestimmt, bei der 95% des Kautschuks vernetzt ist. Die gewählte Temperatur betrug 170°C.

### Bestimmung der Härte:

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A mittels eines digitalen Shore-Härte-Testers (Zwick GmbH & Co. KG, Ulm) bestimmt wurden. Die Härte eines Kautschukvulkanisates gibt einen ersten Hinweis über dessen Steifigkeit wieder.

### Beispiele

Beispiele der Herstellung des erfindungsgemäßen Haftsystems:

### Mischung 1

In einem Becherglas wurden 150g VULKASIL N (gefällte Kieselsäure der Firma Lanxess) vorgelegt. Unter stetigem Rühren wurden 150g COHEDUR A 200 (HMMM-Polymer der Firma Lanxess) und dann 150g Resorzindiacetat zugetropft. Die Mischung wurde durch Rühren homogenisiert.

### Mischung 2

In einem Becherglas wurden 300g VULKASIL N (gefällte Kieselsäure der Firma Lanxess) vorgelegt. Unter stetigem Rühren wurden 150g COHEDUR A 200 (HMMM-Polymer der Firma Lanxess) und dann 150g Resorzindiacetat zugetropft. Die Mischung wurde durch Rühren homogenisiert.

### Mischung 3

In einem Becherglas wurden 300g VULKASIL N (gefällte Kieselsäure der Firma Lanxess) vorgelegt. Unter stetigem Rühren wurden 100g COHEDUR A 200 (HMMM-Polymer der Firma Lanxess) und dann 100g Resorzindiacetat zugetropft. Die Mischung wurde durch Rühren homogenisiert.

### Mischung 4

In einem Becherglas wurden 300g VULKASIL N (gefällte Kieselsäure der Firma Lanxess) vorgelegt. Unter stetigem Rühren wurden 100g COHEDUR A 200 (HMMM-Polymer der Firma Lanxess) und dann 175g Resorzindiacetat zugetropft. Die Mischung wurde durch Rühren homogenisiert.

Die erfindungsgemäßen Haftsysteme wiesen eine homogene Zusammensetzung auf, waren staubarm, rieselfähig, zeigten keine Ausblüherscheinungen und besaßen eine im Vergleich zu den Mischungen des Stands der Technik überraschend hohe Alterungs- bzw. Lagerungsbeständigkeit.

**Tabelle 1: Kautschuk-Rezeptur**

| | Referenz | Kautschuk-rezeptur 1 | Kautschuk-rezeptur 2 | Kautschuk-rezeptur 3 | Kautschuk-rezeptur 4 |
|---|---|---|---|---|---|
| TSR / RSS 3 DEFO 1000 | 100 | 100 | 100 | 100 | 100 |
| CORAX N 326 | 50 | 50 | 50 | 50 | 50 |
| VULKASIL S | 15 | 15 | 12,7 | 10,4 | 10,4 |
| EDENOR C 18 98-100 | 4 | 4 | 4 | 4 | 4 |
| VULKANOX HS/LG | 2 | 2 | 2 | 2 | 2 |
| ZINKOXYD AKTIV | 8 | 8 | 8 | 8 | 8 |
| KORESIN-PULVER | 4 | 4 | 4 | 4 | 4 |
| MAHLSCHWEFEL 90/95 CHANCEL | 4,5 | 4,5 | 4,5 | 4,5 | 4,5 |
| VULKACIT DZ/EGC | 0,7 | 0,7 | 0,7 | 0,7 | 0,7 |
| COHEDUR RDL | 6,9 | | | | |
| TUDALEN 1849-TE | 1,1 | 1,1 | 1,1 | 1,1 | 1,1 |
| Mischung 1 | | 6,9 | | | |
| Mischung 2 | | | 9,2 | | |
| Mischung 3 | | | | 11,5 | |
| Mischung 4 | | | | | 13,2 |

Mengenangaben in phr (Gewichtsteile pro 100 Teile Kautschuk)

| Handelsname | Erläuterung | Hersteller/Vertrieb |
|---|---|---|
| TSR / RSS 3 DEFO 1000 | Naturkautschuk | Handelshaus Weber & Schaer |
| CORAX N 326 | Ruß | Degussa-Evonik GmbH |
| VULKASIL S | Kieselsäure | Lanxess Deutschland GmbH |
| EDENOR C 18 98-100 | Stearinsäure | Cognis Deutschland GmbH |
| VULKANOX HS/LG | 2,2,4-Trimethyl-1,2-dihydrochinolin polymerisiert | Lanxess Deutschland GmbH |
| ZINKOXYD AKTIV | Aktivator | Lanxess Deutschland GmbH |
| KORESIN-PULVER | Klebrigmacherharz | Schill & Seilacher |
| MAHLSCHWEFEL 90/95 CHANCEL | Schwefel | Solvay Deutschland GmbH |
| VULKACIT DZ/EGC | Dicyclohexylbenzothiazylsulfenamid | Lanxess Deutschland GmbH |
| COHEDUR RDL | Haftsystem: Mischung aus Silika, HMMM und Resorzin (1:1:1) | Lanxess Deutschland GmbH |
| TUDALEN 1849-TE | Mineralöl | Hansen&Rosenthal KG |

**Tabelle 2: Zusammenstellung der Ergebnisse**

| Parameter | Einheit | DIN | Referenz | Kautschuk-rezeptur 1 |
|---|---|---|---|---|
| Mooney Viskosität (ML 1+4) | [ME] | 53523 | 57 | 56 |
| Mooney Anvulkanisation bei 130°C (t5) | sec | ASTM D 5289-95 | 795 | 777 |
| Ausvulkanisation bei 170°C (t95) | sec | 53529 | 1401 | 1809 |
| Shore A Härte bei 23°C | [Shore A] | 53505 | 70 | 82 |
| Modul 300 | MPa | 53504 | 15 | 18 |
| Zugfestigkeit | MPa | 53504 | 24 | 24 |

Erfindungsgemäße Haftsysteme enthaltend ein oder mehrere Resorzinester der Formel (I), ein oder mehrere Melaminformaldehydether der Formel (II) sowie ein oder mehrere Füllstoffe zeigten gegenüber einer Referenzmischung enthaltend Resorzin eine deutlich erhöhte Härte ohne die Fließfähigkeit (Mooney-Viskosität) der daraus hergestellten Kautschukmischung zu beeinträchtigen. Die erfindungsgemäßen Haftmischungen führten zu keinen Dispersionsproblemen im Kautschuk und zu keiner Resorzinfreisetzung bei der Verarbeitung der Kautschukmischungen. Weiterhin führten die erfindungsgemäßen Haftsysteme zu deutlich erhöhten Modul 300-Werten bei gleichbleibenden Zugfestigkeitswerten in den damit ausgestatteten Kautschukvulkanisaten.

## Patentansprüche

1. Mischung enthaltend jeweils zumindest einen Resorzinester der Formel (I) 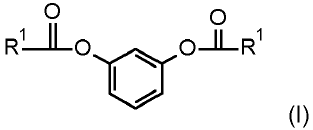 worin
alle Reste R¹ gleich oder verschieden sind und Wasserstoff, einen geradkettigen oder verzweigten C₁-C₄-Alkylrest oder einen Phenylrest, vorzugsweise Methyl bedeuten,
und
einen Melaminformaldehydether der Formel (II) 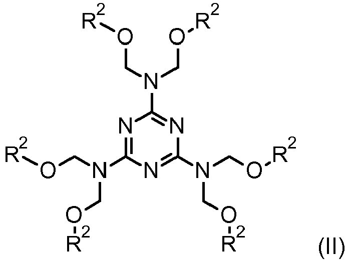 worin
alle Reste R² gleich oder verschieden sind und Wasserstoff oder einen geradkettigen oder verzweigten C₁-C₄-Alkylrest oder einen Phenylrest, bevorzugt Wasserstoff oder Methyl, besonders bevorzugt Methyl bedeutet, wobei aber nicht mehr als 5, vorzugsweise nicht mehr als 4, besonders bevorzugt nicht mehr als 3, ganz besonders bevorzugt nicht mehr als 2 und meist bevorzugt nicht mehr als 1 Rest R² für Wasserstoff steht
und/oder Polymere oder Oligomere Melaminformaldehydether der Formel (II),
und
mindestens einen kieselsäurebasierenden Füllstoff, bevorzugt Fällungskieselsäure oder pyrogene Kieselsäure, besonders bevorzugt Fällungskieselsäure.

2. Mischung gemäß Anspruch 1, **dadurch gekennzeichnet, dass** sie Kieselsäure, mit einer BET-Oberfläche von 5 - 1000 m²/g, bevorzugt von 50 - 400 m²/g, ganz besonders bevorzugt von 100 - 300 m²/g enthält.

3. Mischung gemäß einem der Ansprüche 1 bis 2, **dadurch gekennzeichnet, dass** der Gesamtanteil an Resorzinestern der Formel (I), Melaminformaldehydethern der Formel (II) und/oder Polymeren oder Oligomeren davon mindestens 10 Gew.%, bevorzugt wenigstens 20 Gew.%, besonders bevorzugt 20 - 80 Gew.%, insbesondere 25 - 55 Gew.% bezogen auf die gesamte Mischung beträgt.

4. Mischung gemäß einem der Ansprüche 1 bis 3, **dadurch gekennzeichnet, dass** die Mischung zusätzlich Russe enthält, insbesondere Russe, die nach dem Flammruß, Furnace- und/oder Gasruß-Verfahren hergestellt wurde.

5. Mischung gemäß einem der Ansprüche 1 bis 4, **dadurch gekennzeichnet, dass** sie im Wesentlichen frei von Resorzin ist.

6. Haftsystem für Kautschukmischungen, insbesondere Direkthaftsystem, bestehend aus einer Mischung gemäß einem der Ansprüche 1 bis 5.

7. Verfahren zur Herstellung der Mischungen gemäß einem der Ansprüche 1 bis 5, wobei der kieselsäurebasierende Füllstoff zuerst mit Melaminformaldehydether(n) der Formel (II) und/oder Polymeren oder Oligomeren davon und anschließend mit Resorzinester(n) der Formel (I) beaufschlagt, oder der kieselsäurebasierende Füllstoff gleichzeitig mit Melaminformaldeyhdether(n) der Formel (II) und/oder Polymeren oder Oligomeren davon und Resorzinester(n) der Formel (I) beaufschlagt, oder zuerst mit Resorzinester(n) der Formel (I) und anschließend mit Melaminformaldeyhdether(n) der Formel (II) und/oder Polymeren oder Oligomeren davon beaufschlagt, oder der kieselsäurebasierende Füllstoff mit einer Mischung aus Melaminformaldeyhdether(n) der Formel (II) und/oder Polymeren oder Oligomeren davon und Resorzinester(n) der Formel (I) beaufschlagt, oder Resorzinester der Formel (I) und Melaminformaldeyhdether der Formel (II) und/oder Polymere oder Oligomere davon jeweils separat mit dem kieselsäurebasierenden Füllstoff gemischt und anschließend die Mischungen vereint werden.

8. Verwendung der Mischungen gemäß einem der Ansprüche 1 bis 5 als Haftvermittler in Kautschukmischungen, bevorzugt in mit Schwefel vernetzbaren Kautschukmischungen, besonders bevorzugt in Natur- und/oder Synthesekautschuke enthaltende Kautschukmischungen.

9. Kautschukmischungen enthaltend Natur- und/oder Synthesekautschuke, vorzugsweise Naturkautschuk und/oder Synthesekautschuke ausgewählt aus der Gruppe enthaltend Polybutadien, Butadien/Acrylsäure-C1-C4-alkylester-Copolymerisat, Polychloropren, Polyisopren, Styrol/Butadien-Copolymerisaten mit Styrolgehalten von 1 - 60 Gew-%, Isobutylen/Isopren-Copolymerisate, Butadien/Acrylnitril-Copolymerisate mit Acrylnitrilgehalten von 5-60 Gew.-%, teilhydrierter und vollständig hydrierter NBR-Kautschuk und Ethylen/Propylen/Dien-Copolymerisate, und Mischungen gemäß einem der Ansprüche 1 bis 5 oder Haftsysteme gemäß Anspruch 6.

10. Kautschukmischungen gemäß Anspruch 9, **dadurch gekennzeichnet, dass** sie im Wesentlichen frei von Resorzin sind.

11. Verfahren zur Herstellung der Kautschukmischungen gemäß Anspruch 9 oder 10, durch Mischen von Natur- und/oder Synthesekautschuk(en) mit einer Mischung gemäß einem der Ansprüche 1 bis 5, oder mit Resorzinester der Formel (I) und Melaminformaldeyhdether der Formel (II) und/oder Polymeren oder Oligomeren davon, wobei eine, mehrere, oder alle Komponenten an kieselsäurebasierendem Füllstoff absorbiert eingesetzt werden.

12. Vulkanisate erhältlich durch Vulkanisation von Kautschukmischungen gemäß Anspruch 9 oder 10, vorzugsweise bei Massetemperaturen von 100 bis 200 °C, besonders bevorzugt bei Massetemperaturen von 130 bis 180 °C.

13. Verfahren zur Herstellung von Vulkanisaten durch Vulkanisation von Kautschukmischungen gemäß Anspruch 9 oder 10, vorzugsweise bei Massetemperaturen von 100 bis 200 °C, besonders bevorzugt bei Massetemperaturen von 130 bis 180°C.

14. Verbundartikel bevorzugt in Form von Reifen, Förderbändern, Riemen aller Art, Keilriemen, verstärkten Schläuchen, Feuerwehrschläuchen oder beschichteten Geweben enthaltend Vulkanisate gemäß Anspruch 12.

## Claims

1. Mixture comprising respectively at least one resorcinol ester of the formula (I) 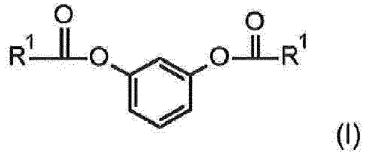 in which
all of the moieties R¹ are identical or different and are hydrogen, a straight-chain or branched C₁-C₄-alkyl moiety or a phenyl moiety, preferably methyl,
and
a melamine-formaldehyde ether of the formula (II) 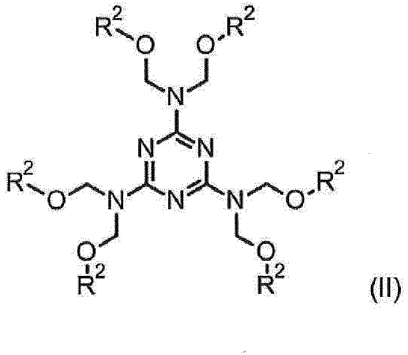 in which
all of the moieties R² are identical or different and are hydrogen or a straight-chain or branched C₁-C₄-alkyl moiety or a phenyl moiety, preferably hydrogen or methyl, particularly preferably methyl, but no more than 5, preferably no more than 4, particularly preferably no more than 3, very particularly preferably no more than 2 moieties R², and most preferably no more than 1 moiety R², are/is hydrogen
and/or polymeric or oligomeric melamine-formaldehyde ethers of the formula (II),
and
at least one silica-based filler, preferably precipitated or fumed silica, particularly preferably precipitated silica.

2. Mixture according to Claim 1, **characterized in that** it comprises silica with BET surface area of from 5 to 1000 m²/g, preferably from 50 to 400 m²/g, very particularly preferably from 100 to 300 m²/g.

3. Mixture according to Claim 1 or 2, **characterized in that** the total proportion of resorcinol esters of the formula (I), melamine-formaldehyde ethers of the formula (II) and/or polymers or oligomers thereof is at least 10% by weight, preferably at least 20% by weight, particularly preferably from 20 to 80% by weight, in particular from 25 to 55% by weight, based on the entire mixture.

4. Mixture according to any of Claims 1 to 3, **characterized in that** the mixture also comprises carbon blacks, in particular carbon blacks produced by the lamp-black, furnace-black and/or gas-black process.

5. Mixture according to any of Claims 1 to 4, **characterized in that** it is in essence free from resorcinol.

6. Adhesive system for rubber mixtures, in particular direct adhesive system, composed of a mixture according to any of Claims 1 to 5.

7. Process for the production of the mixtures according to any of Claims 1 to 5, where the silica-based filler is first brought into contact with melamine-formaldehyde ether(s) of the formula (II) and/or polymers or oligomers thereof and then is brought into contact with resorcinol ester(s) of the formula (I), or the silica-based filler is simultaneously brought into contact with melamine-formaldehyde ether(s) of the formula (II) and/or polymers or oligomers thereof and resorcinol ester(s) of the formula (I), or is first brought into contact with resorcinol ester(s) of the formula (I) and then is brought into contact with melamine-formaldehyde ether(s) of the formula (II) and/or polymers or oligomers thereof, or the silica-based filler is brought into contact with a mixture of melamine-formaldehyde ether(s) of the formula (II) and/or polymers or oligomers thereof and resorcinol ester(s) of the formula (I), or resorcinol esters of the formula (I) and melamine-formaldehyde ethers of the formula (II) and/or polymers or oligomers thereof are respectively separately mixed with the silica-based filler and then the mixtures are combined.

8. Use of the mixtures according to any of Claims 1 to 5 as adhesion promoters in rubber mixtures, preferably in sulphur-crosslinkable rubber mixtures, particularly preferably in rubber mixtures comprising natural and/or synthetic rubbers.

9. Rubber mixtures comprising natural and/or synthetic rubbers, preferably natural rubber and/or synthetic rubbers selected from the group comprising polybutadiene, butadiene/C₁-C₄-alkyl acrylate copolymer, polychloroprene, polyisoprene, styrene/butadiene copolymers with styrene contents of from 1 to 60% by weight, isobutylene/isoprene copolymers, butadiene/acrylonitrile copolymers with acrylonitrile contents of from 5 to 60% by weight, partially hydrogenated and fully hydrogenated NBR rubber and ethylene/propylene/diene copolymers, and mixtures according to any of Claims 1 to 5 or adhesive systems according to Claim 6.

10. Rubber mixtures according to Claim 9, **characterized in that** they are in essence free from resorcinol.

11. Process for the production of the rubber mixtures according to Claim 9 or 10 via mixing of natural and/or synthetic rubber(s) with a mixture according to any of Claims 1 to 5, or with resorcinol ester of the formula (I) and melamine-formaldehyde ether of the formula (II) and/or polymers of oligomers thereof, where one of, a plurality of, or all of, the components is/are used in a form absorbed on silica-based filler.

12. Vulcanizates obtainable via vulcanization of rubber mixtures according to Claim 9 or 10, preferably at mixture temperatures of from 100 to 200°C, particularly preferably at mixture temperatures of from 130 to 180°C.

13. Process for the production of vulcanizates via vulcanization of rubber mixtures according to Claim 9 or 10, preferably at mixture temperatures of from 100 to 200°C, particularly preferably at mixture temperatures of from 130 to 180°C.

14. Composite products preferably in the form of tyres, belts of any type, inclusive of conveyor belts and V-belts, reinforced hoses, fire hoses or coated textiles comprising vulcanizates according to Claim 12.

## Revendications

1. Mélange contenant à chaque fois au moins un ester de résorcinol de formule (I) 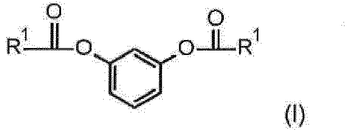
dans laquelle tous les radicaux R¹ sont identiques ou différents et signifient hydrogène, un radical C₁-C₄-alkyle linéaire ou ramifié ou un radical phényle, de préférence méthyle, et un éther de mélamine-formaldéhyde de formule (II) 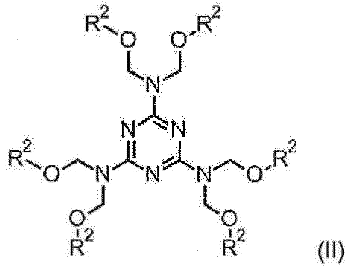
dans laquelle tous les radicaux R² sont identiques ou différents et signifient hydrogène ou un radical C₁-C₄-alkyle linéaire ou ramifié ou un radical phényle, de préférence hydrogène ou méthyle, de manière particulièrement préférée méthyle, mais pas plus de 5 radicaux, de préférence pas plus de 4 radicaux, de manière particulièrement préférée pas plus de 3 radicaux, de manière tout particulièrement préférée pas plus de 2 radicaux et le plus préférablement pas plus de 1 radical R² ne représentant hydrogène
et/ou des polymères ou des oligomères de l'éther de mélamine-formaldéhyde de formule (II), et
au moins un colorant à base de silice, de préférence une silice précipitée ou une silice pyrogène, de manière particulièrement préférée une silice précipitée.

2. Mélange selon la revendication 1, **caractérisé en ce qu'**il contient une silice présentant une surface BET de 5-1000 m²/g, de préférence de 50-400 m²/g, de manière tout particulièrement préférée de 100-300 m²/g.

3. Mélange selon l'une quelconque des revendications 1 à 2, **caractérisé en ce que** la proportion totale des esters de résorcinol de formule (I), des éthers de mélamine-formaldéhyde de formule (II) et/ou de leurs polymères ou oligomères est d'au moins 10% en poids, de préférence d'au moins 20% en poids, de manière particulièrement préférée de 20-80% en poids, en particulier de 25-55% en poids, par rapport au mélange total.

4. Mélange selon l'une quelconque des revendications 1 à 3, **caractérisé en ce que** le mélange continent en outre des suies, en particulier des suies qui ont été préparées selon le procédé de noir de fumée, de noir au tunnel et/ou de noir de gaz.

5. Mélange selon l'une quelconque des revendications 1 à 4, **caractérisé en ce qu'**il est essentiellement exempt de résorcinol.

6. Système adhésif pour mélanges de caoutchouc, en particulier système adhésif direct, constitué par un mélange selon l'une quelconque des revendications 1 à 5.

7. Procédé pour la préparation des mélanges selon l'une quelconque des revendications 1 à 5, la charge à base de silice étant d'abord chargée par le ou les éthers de mélamine-formaldéhyde de formule (II) et/ou leurs polymères ou oligomères et ensuite par le ou les esters de résorcinol de formule (I) ; ou la charge à base de silice étant chargée simultanément par le ou les éthers de mélamine-formaldéhyde de formule (II) et/ou leurs polymères ou oligomères et le ou les esters de résorcinol de formule (I) ; ou d'abord par le ou les esters de résorcinol de formule (I) et ensuite par le ou les éthers de mélamine-formaldéhyde de formule (II) et/ou leurs polymères ou oligomères ; ou la charge à base de silice étant chargée par un mélange d'un ou de plusieurs éthers de mélamine-formaldéhyde de formule (II) et/ou leurs polymères ou oligomères et d'un ou de plusieurs esters de résorcinol de formule (I) ; ou les esters de résorcinol de formule (I) et les éthers de mélamine-formaldéhyde de formule (II) et/ou leurs polymères ou oligomères étant à chaque fois mélangés séparément avec la charge à base de silice et les mélanges étant ensuite rassemblés.

8. Utilisation des mélanges selon l'une quelconque des revendications 1 à 5 comme promoteur d'adhérence dans des mélanges de caoutchouc, de préférence dans des mélanges de caoutchouc réticulables à l'aide de soufre, de manière particulièrement préférée dans des mélanges de caoutchouc contenant des caoutchoucs naturels et/ou de synthèse.

9. Mélanges de caoutchouc contenant des caoutchoucs naturels et/ou de synthèse, de préférence du caoutchouc naturel et/ou des caoutchoucs de synthèse choisis dans le groupe contenant le polybutadiène, le copolymère de butadiène/ester C₁-C₄-alkylique de l'acide acrylique, le polychloroprène, le polyisoprène, les copolymères de styrène/butadiène présentant des teneurs en styrène de 1-60% en poids, les copolymères d'isobutylène/isoprène, les copolymères de butadiène/acrylonitrile présentant des teneurs en acrylonitrile de 5-60% en poids, le caoutchouc NBR partiellement et complètement hydrogéné et les copolymères d'éthylène/propylène/diène, et des mélanges selon l'une quelconque des revendications 1 à 5 ou des systèmes adhésifs selon la revendication 6.

10. Mélanges de caoutchouc selon la revendication 9, **caractérisés en ce qu'**ils sont essentiellement exempts de résorcinol.

11. Procédé pour la préparation des mélanges de caoutchouc selon la revendication 9 ou 10 par mélange de caoutchouc(s) naturel(s) et/ou de synthèse avec un mélange selon l'une quelconque des revendications 1 à 5 ou avec des esters de résorcinol de formule (I) et des éthers de mélamine-formaldéhyde de formule (II) et/ou leurs polymères ou oligomères, un, plusieurs ou tous les composants étant utilisés sous forme absorbée sur une charge à base de silice.

12. Produits vulcanisés pouvant être obtenus par vulcanisation de mélanges de caoutchouc selon la revendication 9 ou 10, de préférence à des températures de la masse de 100 à 200°C, de manière particulièrement préférée de 130 à 180°C.

13. Procédé pour la préparation de produits vulcanisés par vulcanisation de mélanges de caoutchouc selon la revendication 9 ou 10, de préférence à des températures de la masse de 100 à 200°C, de manière particulièrement préférée de 130 à 180°C.

14. Objets composites de préférence sous forme de pneus, de bandes transporteuses, de courroies de tous types, de courroies trapézoïdales, de tuyaux renforcés, de tuyaux pour pompe à incendie ou de tissus revêtus, contenant des produits vulcanisés selon la revendication 12.
